# EUROPEAN PATENT SPECIFICATION

(11) **EP 0 538 663 B1**
(45) Date of publication and mention of the grant of the patent: **15.05.1996**
(21) Application number: 92116899.3
(22) Date of filing: 02.10.1992
(51) Int. Cl.: C04B 35/64, B32B 18/00, C03C 14/00, C03C 8/14, H01L 21/48

(54) **Microwave methods of fabricating multi-layer ceramic substrates**
Verfahren zur Herstellung von Vielschicht-Keramiksubstraten mittels Mikrowellenheizung
Fabrication de substrats céramiques multi-couches par chauffage micro-ondes

(30) Priority: 25.10.1991 US 782921
(43) Date of publication of application: 28.04.1993
(73) Proprietor: International Business Machines Corporation, Armonk, N.Y. 10504 (US)
(72) Inventor: Lewis, David Andrew, Carmel, NY 10512 (US); Shaw, Jane Margaret, Ridgefield, CT 06877 (US)
(74) Representative: Schäfer, Wolfgang, Dipl.-Ing.

(56) References cited:
- EP-A- 0 193 782
- EP-A- 0 312 824
- EP-A- 0 332 457
- GB-A- 2 173 783
- US-A- 4 906 514
- US-A- 4 963 709
- DATABASE WPIL, Week 8642, Derwent Publications Ltd., London (GB); AN 86-274587
- CHEMICAL ABSTRACTS, vol. 115, 09 September 1991, Columbus, OH (US); H.KURIBAYASHI et al., no. 97862m, "Electrically Insulating Crystallized Aluminosilicate Glass Compositions"

## Description

The present invention relates to methods of microwave fabrication of substrates which are useful as circuit substrates on which semiconductor chips, provided with very large scale integrated circuits, are electrically mounted.

Multi-layered ceramic circuit substrates contain patterned metal layer which act as electrical conductors sandwiched between ceramic layers which act as electrical insulators. These ceramic substrates are formed by laminating together thin green sheets of glass particles or an admixture of glass and crystalline particles mixed with binders and patterns of paste containing metal particles mixed with binder for forming conductors between the ceramic green sheet. This green laminate is fired to burn off the binder materials, fired to coalesce the particles to a dense state, further fired if necessary to crystallize the densified glass particles or to further crystallize the admixture of glass and crystalline particles to form an insulator and to coalesce the metal particles to form conducting metal lines.

Terms such as ceramic and glass ceramic are often used interchangeably in the art. To avoid confusion for the purpose of this application the following definitions will be used. The term ceramic has the following meaning: an aggregate of randomly oriented crystallites wherein the interstices between crystallites optionally contain uncrystallized material such as a glass. The terms coalescence or densification refer to a heat treatment to reduce the density of pores in greensheets. The term crystallization refers to further heating after coalescence or densification or heating if there is no coalescence or densification step, to form crystallites from a glass. The term sintering refers to the heat treatment required to form the final ceramic. Sintering of a greensheet of crystallizable glass particles is a heat treatment to coalesce or densify the greensheet plus the heat treatment to form crystallites from the glass. Sintering of a greensheet of an admixture of glass particles and crystalline particles is a heat treatment to coalesce or densify the greensheet plus a crystallizing heat treatment only if further crystallization is required. The term sintering temperature means, for a greensheet requiring crystallization, the crystallization temperature. The term sintering temperature means, for a greensheet not requiring crystallization, the coalescence temperature.

Substrates made of ceramics requiring high temperatures for particle coalescence and densification such as alumina, restrict the choice of co-sinterable conducting metallurgies to high melting point metals, for example, refractory metals, such as molybdenum, tungsten, platinum, palladium or a combination of these with each other or certain other metals and precludes the use of good electrical conductors such as gold, silver and copper which have melting points less than the alumina sintering temperature. Alumina is a good insulator, has high thermal conductivity and has good strength. However, it is disadvantageous with respect to its dielectric constant and its thermal coefficients of expansion. The relatively high dielectric constant of alumina, about 10, results in unacceptable electrical signal delays since the pulse propagation speed on the transmission line formed by metal conductor embedded in the dielctric material of the substrate is inversely proportional to the square root of the material dielectric constant. The higher thermal coefficient of expansion of alumina, compared to silicon, results in sheer stress in the solder joints electrically and mechanically connecting device and circuit elements on the chip to the substrate.

Material often referred to as glass-ceramic has been intensively studied in recent years for use as circuit substrates. These ceramics generally have a low dielectric constant, a low thermal coefficient of expansion which is close in value to silicon and a low sintering temperature. The low sintering temperature permits the use of low melting point metals, such as copper and noble metals, for electrical conductors. Noble metals have low resistivities comparable to copper. However, copper is less expensive and therefore its use substantially reduce manufacturing cost. When copper is used as the electrical conductor, it is necessary that thermoplastic organic binder materials contained within the greensheet used to form the ceramic and contained within the paste used to form the copper conductors be burned out in an atmosphere and at a temperature wherein the copper is not substantially oxidized.

Failure to burn out binders results in less than desirable ceramic properties. For example, if the binder is not fully burned out, residual carbon is left in the sintered ceramic which modifies the ceramic dielectric constant and inhibits complete densification. With only 0.1% residual carbon content the ceramic may be black having an apparent dielectric constant greater than 1000 and, rather than being an insulator the fired ceramic will be a semiconductor.

Removal of the binder is complicated by the additional requirement that the burn-out ambient not oxidize the copper metal lines and planes. If the copper is oxidized, the copper oxide diffuses into the ceramic and changes the dielectric properties of the ceramic. Also, when copper is oxidized it expands causing stress within the green laminate which can result in delamination and cracking of the green laminate. Such cracks may not be removed by the sintering heat treatment, thereby resulting in a ceramic weakened by cracks.

Two references generally describing binder burn-out and the fabrication of ceramics are US 4,234,367 to Herron et al. and US 4,504,339 to Kamehara et al.

Herron et al. US 4,234,367 describes a method for forming sintered ceramic substrates containing multilevel, interconnected circuit patterns of copper-based conductor films obtained by heating the green laminate composed of particles of crystallizable glass in an ambient of hydrogen and water to a burn-out temperature of about 700°C to 800°C at a rate of 1°C to 3°C per minute. A lower burn-out temperature would take a prohibitively excessive amount of time for carbon removal. The binder burn-out time is about 11 hours as is apparent from Fig. 4 of the Herron et al. patent. This long time is needed: 1) to avoid bloating of the ceramic article caused by entrapped volatile products which cause the article to expand instead of contracting on sintering, 2) to fully oxidize carbon in the binders, 3) to avoid drastic volume changes in the copper conductor resulting from the copper-oxide formation, and 4) to maintain reducing to neutral conditions for copper. After the binder is burned out the laminate is sintered in a neutral atmosphere to form the ceramic material by first heating to coalesce the laminate to a dense state and thereafter heating to form crystals from the densified glass particles.

Copending US application Serial Number 929,975 filed November 12, 1986 assigned to IBM describes a method for forming sintered ceramic substrates containing multilevel, interconnected circuit patterns of copper-based conductors therein by sintering in a reducing atmosphere after the binders are burned out.US 4,505,339 describes a method for forming sintered ceramic substrates containing multilevel, interconnected circuit patterns of copper-based conductor films from a green laminate composed of an admixture particles of glass and particles of crystallites. Binders are burned-out by firing the substrate in a controlled ambient of an inert atmosphere, e.g. nitrogen, containing water vapor at a partial pressure from 0.005 to 0.3 atmospheres at a temperature between 550°C and 650°C for a time sufficient to burn out the binders in the green laminate and thereafter raising the temperature in an inert atmosphere without water to the sintering temperature to coalesce the green laminate to form the ceramic. The binder burn-out time is about 8 hours as is apparent from FIG. 2 of the Kamehara et al. patent. The burn-out temperature upper bound is limited to 650°C because if the burn-out temperature used were higher, the glass components of the green sheets would begin to coalesce hindering further binder removal.

Both the patent to Kamehara et al. and the patent to Herron et al. teach increasing the burn-out temperature to increase the burn-out rate. In the present invention it is an object to achieve an increased burn-out rate without the necessity of a higher temperature as required by the methods of the prior art.

EP-A-0 312 824 discloses a method for forming a ceramic structure with copper based conductors comprising:
forming at least one green sheet comprised of a thermoplastic organic binder having dispersed therein particles in particular of glass, said green sheet having a sintering temperature below the melting point of said copper based conductors;
forming on a surface of said first green sheet a pattern of oxidation resistant copper based conductor forming composition;
superimposing a second said sheet on said surface of said first sheet;
laminating said superimposed sheets together;
heating said laminate in air to a burn-out temperature; and
sintering said laminate in a reducing or inert atmosphere.

JP-A-61 199 001 teaches an increased sintering speed of powered ceramic by removing the water binder using microwave irradiation in a container evacuated to 5 Torr and applying an electrostatic field prior to sintering.

A method for manufacturing multilayer ceramic substrates is disclosed in EP-A- 0 332 457, comprising thermally treating a laminate of alternately superimposing ceramic-glass insulating layers and CuO-based electrode layers of desired patterns in air or in a molecular oxygen-containing atmosphere to eliminate organic binders from the laminates by burning out, reducing the CuO into metallic Cu at low temperatures in an atmosphere containing hydrogen, and firing the thus reduced laminate in an inert gas such as nitrogen. The firing is effected at 850 to 950°C.

A method of the present invention forms sintered ceramic substrates containing multilevel, interconnected circuit patterns of conductor films obtained by first firing in air with microwave radiation to burn-out binders. The binder burn-out time is about minutes in contrast with the many hours burn-out times required in the prior art. The binders are more efficiently burned out in an atmosphere of air than in the prior art atmospheres. The temperature is then raised in an inert or reducing atmosphere to the ceramic sintering temperature, preferably by application of microwave radiation.

The prior art does not teach or suggest using microwave radiation to burn out binders in air. Avoiding the required special atmosphere of the prior art by using air for binder burn-out results in a substantially less complex and less costly process for ceramic circuit substrate fabrication. Use of microwave radiation for binder burn-out substantially reduces substrate fabrication time and therefore substrate cost.

While parameters such as temperature, time and atmosphere are important in an improved burn-out process, other considerations must also be observed if a ceramic having metal conductors therein is used as an integrated circuit substrate. These other considerations include the following requirements: first, the embedded conducting lines preferably have a resistivity which is not greater than the resistivity of a material such as molybdenum which has a resistivity about three times the resistivity of substantially pure copper. The resistivity of molybdenum is marginal for state of the art multi-layered ceramic substrates, especially for high performance applications. Fine lines of molybdenum are generally too resistive for low loss transmission lines and voltage planes of molybdenum are too resistive for the high currents required in the power distribution system. Second, any oxidation of the embedded conductors must not be great enough to disturb the green laminate. Oxide formation at a conductor surface causes volume expansion of the oxidized material resulting in stress which can cause delamination and cracking of the green laminate. Third, any change in the dielectric constant of the ceramic caused by interdiffusion of metal oxide in the ceramic must be limited to maintain the dielectric constant to a value less than the dielectric constant of alumina which is about 10.

It has been found, quite unexpectedly, that all these requirements can be met while burning out binders in air with microwaves even when a copper based metallurgy is used for the conductor pattern within the ceramic substrate. The microwave burn-out does not heat the work piece during burn out to a high enough temperature to oxidize the copper.

Quite surprisingly, it has been found that the active composite of green ceramic and metal paste patterns can be sintered by microwave radiation while substantially maintaining the integrity of the entire final structure and avoiding complete oxidation of the conductors therein.

It is an object of the present invention to provide an improved method for producing a multi-layered ceramic structure with patterns of electrical conductors therein.

It is another object of the present invention to produce a multi-layered ceramic circuit substrate by sintering with microwaves a laminated unsintered green composite with copper-based metallurgy contained therein in which organic binder resins can be completely burned out in air without leaving any carbonaceous residue in the ceramic insulator, without substantially oxidizing the copper-based metallurgy and without degrading the ceramic layers.

It is another object of the present invention to provide an improved technique for fabricating ceramic structures having conductors embedded therein wherein the dielectric constant of the ceramic is not adversely affected by the fabrication process.

US Patent 4,963,709 teaches compressing alumina powder and heat treating with microwaves to densify the alumina powder. There is no teaching or suggestion of embedded electrical conductors or binders. Therefore, there is no concern with residue and conductor oxidation.

US 4,529,857 describes sealing a first alumina structure to a second alumina structure by disposing therebetween a slurry of glass particles in combination with watch oil as a coupling agent. Microwaves are applied, which are absorbed by the watch oil which is placed in a microwave oven at 700 watts for 99 minutes. "As the watch oil slowly rises in temperature by convective heat transfer, it also causes the glass to rise in temperature by convective heat transfer from the microwave heated organic oil coupling agent... Eventually, the oil-glass combination reaches the decomposition temperature of the watch oil coupling agent", Column 2, lines 43-49. The alumina substrates are not cosintered with the sealing agent. The alumina substrates are not described as containing conductors. Therefore, there is no concern with carbon residue and conductor oxidation.

The method of the present invention, in its broadest aspect, comprises forming a multi-layer ceramic or glass composite structure with conductors therein, wherein binders in the green sheets forming the ceramic or glass are burned-out with microwaves.

The composite structure is formed from at least one green sheet comprised of a thermoplastic organic binder having dispersed within the binder glass particles or an admixture of glass and crystalline particles. The green sheet has a sintering temperature below the melting point of the metallurgy which forms conductors within the composite structure. On the surface of the green sheet is deposited a pattern of a conductor forming composition.

A second green sheet is superimposed on the surface of the first green sheet sandwiching the metal pattern between the first and second green sheets. A multi-layered structure can have any number of conducting layers and green sheet layers positioned between the conducting layers. The green sheets are laminated together. The laminated green sheets are then microwave heated in an ambient, e.g., air to a burn-out temperature and maintained thereat for a time sufficient to decompose and eliminate the binders.

The burn-out temperature is not sufficient to cause a substantial change in the state of the green laminate and the conductor precursor paste therein. An inert or reducing atmosphere is provided and the laminate is sintered to form the ceramic structure having at least one layer of conductors within the interior of the structure. For green sheets of glass particles sintering includes heating to a temperature sufficient to coalesce the green laminate to a dense state and thereafter heating to crystallize the glass particles into a ceramic composite material. For green sheets of an admixture of glass particles and crystalline particles if no additional crystallization is required sintering is limited to heating to a temperature sufficient to coalesce the green laminate to a dense state to form the ceramic. If additional crystallization is required, the densified laminate is thereafter heated to crystallize glass particles to form the ceramic.

In a more particular aspect of the present invention, the metallurgy used to form the conductor patterns is preferably copper based.

In accordance with a more particular aspect of the present invention, the conductor patterns within the multi-layered ceramic structure are extended to at least one surface of the structure. A semiconductor chip is mounted to the ceramic or polymer surface in electrical connection to at least a portion of the pattern extensions and optionally to a polymer body containing electrical conductors.

Further, microwave radiation is used to remove the binder in a significantly shorter time and at a lower temperature than is possible with conventional treatments. The green ceramic can than be optionally sintered using microwave radiation.

These and other objects, features and advantages will be apparent from the following more particular description of the preferred embodiments and claims.

For convenience, the following discussion describes the invention using copper-based conductors. However, the invention is not limited thereto. It was discovered, in accordance with this invention that binders in green sheets of glass particles or an admixture of glass and crystalline particles used to form a sintered ceramic article and binders in a copper-based paste used to form conductors within the sintered article can be burned out in an ambient of air while maintaining minimal and non-detrimental oxidation of the surface of the copper-based conductors by using microwaves to burn-out the binders.

A ceramic composite structure formed by the method of the present invention is useful as a substrate on which a semiconductor chip is mounted to provide electrical connection of device and circuit elements on such semiconductor chip to a support structure, such as a printed circuit board to which the substrate is electrically connected.

An object of this invention is to provide a process of manufacturing ceramic materials suitable for packaging of electronic circuits at a temperature compatible with the metallization used to provide electrical circuit conductors. It is important that the process be performed at a temperature below the melting or sintering temperature of the metallization, such as copper, formed on or within the ceramic material. The melting point of copper is about 1083°C. If the metallization is heated excessively, it melts, disperses, or acts as a flux to the glass or melts to form a puddle on the ceramic material. If the metallization is damaged, the electrical circuits in the integrated circuit structure are destroyed, thereby destroying the value of the package. It is a prerequisite in the art of electronic circuit packaging that the ceramic materials be processed at lower temperatures compatible with preserving the metallization structures on the packages. Metals for use in packages include but is not limited to Ag, Au, Al and Cu.

The composite structure is formed from at least one green sheet, comprised of a thermoplastic organic binder having dispersed within the binder particles of a crystallizable glass or an admixture of glass particles and crystalline particles. Commonly used ceramic binders are Butvar (registered trademark of Monsanto Inc.), poly(vinyl butyral) and poly(vinyl acetate), poly(methyl methacrylate) and cellusolve acetate. Such binders are exemplary only and not limiting. The sintering temperature of the green sheet is less than the melting point of the copper-based metallurgy which forms conductors within the composite structures. The sintering temperature of a green sheet composed of crystallizable glass particles is the crystallization temperature. The sintering temperature of an admixture of glass and crystalline particles is the coalescence temperature if no further crystallization is required or the crystallization temperature if further crystallization is required.

Examples of crystallizable glasses, useful for practicing the present invention, are disclosed in U.S. Patent No. 4,301,324 to Kumar et al. and the process for making such ceramic structure is disclosed in U.S Patent No. 4,413,061 to Kumar et al. The disclosed ceramic structures are characterized with low dielectric constants and are compatible with circuitry of copper-based metallurgy co-sinterable therewith. These glasses have crystallization temperature in the range of about 850°C to 970°C.

Of the two types of ceramics disclosed in the aforesaid patent Nos. 4,301,324 and 4,413,061, one has spodumene, Li₂·Al₂O₃·4SiO₂, as the principal crystalline phase while the other has cordierite, 2MgO·2Al₂O₃·5SiO₂, as the principal crystalline phase. A common feature of these sintered ceramics, among others, is their excellent sinterability and crystallization below 1000°C.

The terms spodumene glass and cordierite glass as used herein refer to the uncoalesced and uncrystallized glass particles. The terms spodumene ceramic and cordierite ceramic as used herein refer to the coalesced and crystallized ceramic.

The multi-layered ceramic of the present invention includes, but is not limited to, the spodumene ceramics and cordierite ceramics as described in the Kumar et al. patents.

Examples of crystalline particles useful to form an admixture of glass and crystalline particles from which a ceramic can be formed include but are not limited to cordierite, spodumene, eucriptite, borosilicate glass, lead glass, enstatite, celsian, wollastonite, willemite, anorthite, lithium disilicate, lithium metasilicate, mullite, aluminum nitride, combinations thereof and combinations thereof with alumina.

The following is a list of the general formula for the predominant components of the materials mentioned above:
celsian, BaO·Al₂O₃·2SiO₂
anothite, CuO^{·}Al₂O₃·2SiO₂
lithium disilcate, Li₂O₆·2SiO₂
lithium metasilicate, Li₂O₆·2SiO₂
wollastinite, CaO·SiO₂
willemite, 2ZnO·SiO₂
eucriptite, Li₂·Al₂O₃·2SiO₂
mullite, 3Al₂O₃·2SiO₂
enstatite, MgO·SiO₂
The term glass ceramic means an aggregate of randomly oriented crystallites, for example, the material listed above, wherein the intersticies between crystallites may contain uncrystallized material such as glass, for example the precursor of the above listed materials.

For convenience the invention will be described with reference to a cordierite glass ceramic containing copper conductors. However, the invention is not limited thereto.

The glass particles contained in the admixture can be any glass, such as for example borosilicate glass, and lead glass which will coalesce to a dense state to encapsulate the crystalline particles.

On the surface of the green sheet is deposited a pattern of a copper-based conductor forming composition which includes a copper paste binder, for example ethylcellulose.

A second green sheet is superimposed on the first sheet to sandwich the conductor pattern therebetween. The sheets are laminated together. A multi-layered ceramic structure is formed by laminating green sheets alternately with patterns of copper-based paste between green sheets. Copper patterns separated by glass sheets are connected by through-holes or vias in the green sheets which are filled with the copper-based paste. For a ceramic structure for use as a semiconductor chip substrate, the copper pattern is extended to at least one surface of the composite structure.

The laminated structure is microwave heated to the burn-out temperature in an environment sufficiently oxidizing to oxidize the binder material but not oxidizing enough to oxidize the conductor forming composition. Burn out is at a rate which does not disturb the integrity of the substrate. If burn-out is too rapid, plasticizers contained in the binder in the green sheets will come off too rapidly causing blisters and resulting in delamination of the green laminate. The laminate is maintained at the burn-out temperature for a sufficient time to decompose and eliminate the binders in the green sheets and copper-based paste. The temperature must not be high enough to melt the copper-based conductor pattern and must not be high enough to cause coalescence of the glass particles. A requirement for binder removal is that the ceramic body remain porous until all residues have been removed. If the glass particles in the green laminate begin to coalesce before the binders are burned-oat, the products of the binder decomposition become trapped in the ceramic: 1) leaving carbon residues which increase the ceramic dielectric constant, 2) forming pores in the glass ceramic preventing its complete densification and 3) delaminating the green laminate if the pressure of the trapped products is great enough.

A suitable environment is an ambient of air and the H₂O/ H₂ environment of Herron et al. (US 4,234,367) and the environment of Kamahara et al. (US 4,504,339).

An apparatus for microwave heating is described in copending US patent application, Serial Number 07/551,716 filed July 11, 1990 assigned to the assignee of the present invention. The processing can be performed in any single mode microwave applicator, as described in the patent application referenced above, controlled multi-mode microwave applicator provided the electric field strength is sufficiently uniform as to provide substantially (i) uniform temperature profiles throughout the part; (ii) ultimately substantially uniform burn-out of the binder without the sintering/melting of the part, if required. The processing system should have sufficient control of the microwave power utilized as to maintain the desired temperature-time profile as required.

If these structures are then heated at a rate of about 1°C to 5°C per minute in a reducing atmosphere, such as forming gas (10% H₂ - N₂) or a neutral atmosphere of nitrogen gas, to the ceramic sintering temperature, e.g. 950°C, and held there for two hours, the ceramic density achieved is about 99% of the theoretically calculated density. During this heating step, as noted above any oxide formed at the conductor surface is reduced. The binder in structures containing many layers of spodumene or cordierite ceramic sheets laminated with planes of copper were burned out in air by placing the part in an electric field operating at the microwave frequency of 2.45 GHz, although any microwave or RF radiation would be suitable. In a typical cycle, the part is heated to 160°C in air in a few minutes, at which point the butvar® binder partially oxidizes, turning the part black with some evidence of "smoke" coming from the part. This segment could also be accomplished using a hotplate, oven, IR or visible/UV radiation or any other method of heating. At this temperature the cavity tuning varies significantly, indicating a substantially greater microwave absorption by the part than occurred initially, presumably due to the increased absorption of the partially oxidized binder. The microwave power level is reduced to control the burn-out rate, thereby preventing delamination of distortion of the structure. The temperature is maintained below 250°C to prevent substantially oxidizing the copper wiring with the part, for up to about 40 minutes, or until the binder has been substantially removed. If a non-oxidizing atmosphere for the metal is utilized, much greater temperatures can be employed, or if oxidiziation of the metal is not a concern, greater temperature in an oxidizing environment can be used.

At this point, the structure is pure white, very brittle and the powder can be easily removed from the part if care is not exercised.

Rather than maintain a constant microwave power, there may be some advantages in slowly varying the power to reasonable high levels and decreasing the power to allow cooling and prevent excessive temperatures being reached whereupon oxidiation of the copper may initiate or densificiation may begin or thermal runaway occurs, in which case the temperature increases rapidly to sintering and melting temperatures for the ceramic.

The part can be surrounded by any material, including a solid mold or thermally insulating material, provided there is sufficient access of oxygen or other oxidizing medium to the part to allow the complete oxidation of the polymeric binder. The mold can be permeable or contain separate means for introducing the oxidizing medium to the part.

Alternatively, these structures are then microwave heated at a rate of about 1°C to 100°C per minute in N₂ or a reducing atmosphere, such as forming gas (10% H₂ - N₂) or a neutral atmosphere of nitrogen gas, to the ceramic sintering temperature, e.g., 950°C, and held there for 1 hour, the ceramic density achieved is about 99% of the theoretically calculated density. During this heating step, if :N₂ is used some oxides formed at the conductor surface. It is contemplated that if forming gas is used there will be no oxidation of copper conductors.

The upper bound of the binder burn-out temperature is set by the ceramic densification/melting characteristics and metal oxidation properties. The stacked layers of green sheets must be porous at the binder removal hold temperature to allow complete removal of the binders. If the hold temperature is too high, the glass particles will densify trapping binder residue. Examples of illustrations of ceramics used for the preferred embodiment of this invention are the spodumene and cordierite glass formulations disclosed in the aforesaid patents to Kumar et al. The crystallization temperatures of these ceramics are in the range of about 850°C to about 970°C. In a second firing step the laminated multi-layered glass structure is heated preferably at a rate of about 1°C to 5°C per minute in a reducing or neutral atmosphere to the sintering temperature.

A fired composite structure of laminated multi-layer ceramic layers with metal planes therein for use as a circuit substrate has the metal pattern extended to at least one surface of the fired laminate. An integrated circuit semiconductor chip is mounted on the laminate in electrical connection with the metal extensions.

Alternatively, on the ceramic surface to which the metal patterns extend a polymer body containing electrical conductors can be disposed. These conductors are electrically connected to the ceramic structure conductors and extend to a surface of the polymer body to which an electronic device, e.g., a semiconductor chip is electrically connected as described in US Application Serial No. 07/695,368, filed May 3, 1991.

Since the upper bond of the burn out temperature is controlled by the sintering properties of the ceramic and the burn out temperature using microwave radiation is substantially lower than can be obtained using conventional techniques, the process described herein can be extended to the burn out of binders from low melting glasses in glass ceramics.

It can also be utilized for the burn out of binder from low temperature ceramics and glasses before densification, allowing the processing of green ceramics in a manner not possible using conventional techniques. This then allows a binder to be used for low temperature ceramics, but ensures the complete removal of binder and hence produces minimal impact on the final desired properties of the sintered material, while allowing intermediate processing.

Binder materials are very high molecular weight materials generally having greater than about 100 carbon atoms, preferably having greater than about 100,000 carbon atoms. Binders permit the formation of green glass bodies containing particles of crystallized or crystallizable or uncrystallizable glass which are held together by the binder. The binder particle mixture is cast into a body of predetermined shape. The viscosity of the binder is sufficiently high so that the body retains its shape. In the fabrication of semiconductor chip substrates sheets are cast. Holes are formed in the sheets and patterns of an electrical conductor forming composition are formed in the sheets.

Therefore, the rigidity of the cast sheet is sufficiently high to sustain a substantial amount of handling.

As taught herein, the binders are burned out with microwave radiation. Although applicants do not want to be limited to a particular theory, it is believed that the green ceramic particles initially absorb the microwave radiation which locally heats the binder to a temperature sufficient to begin decomposing the binder to generate carbon, which more strongly absorbs the radiation resulting in a high local radiation absorption at the binder molecule locations resulting in substantially complete binder decomposition and removal. As a result of this mechanism the green body does not have to be heated to as high an average temperature to burn out the binder as is required by conventional heating techniques. For example, in Herron et al., incorporated herein by reference, the green body is heated to between 700°C and 800°C to burn out the binder. According to the methods taught herein, the binder can be burned out at about 250°C using the same binder particle combination. That is, as a result of the application of the microwaves, the body temperature only reaches 250°C instead of 700°C to 800°C. Therefore, using microwaves to burn out binders permits the use of glass particles which will coalesce at lower temperatures. Generally, it is desirable to burn out the binder completely before coalescence to permit the decomposition products to escape. If the glass particles begin to coalesce these products can get trapped in the coalesced body causing undesirable results.

### EXAMPLE

The multi-layered substrate fabrication process involves the following illustrative basic steps.

### Step 1

The cullet of the chosen crystallizable glass, a cordierite type glass disclosed in U.S. Patent No. 4,301,324 to Kumar et al., is ground to average particle sizes in the range of 2 to 7 micrometers. The grinding can be done in two steps, a preliminary dry or wet grinding to 0.037 mm (400 mesh) particle size followed by further grinding with suitable organic binders and solvents until the average particle size is reduced to lie between 2 to 7 micrometers and a castable slurry or slip is obtained. A single stage prolonged grinding of the cullet in the medium of the binder and solvent, until the desired particles sizes are obtained can be used. In the latter case, a filtering step may be necessary to remove over-sized particles.

By way of example, a suitable binder is polyvinylbutyral resin with a plasticizer such as dipropylglycol-dibenzoate (e.g. the commercial Benzoflex plasticizer of the Tennessee Products and Chemical Corp). Other suitable polymers are polyvinyl acetate, selected ones of the acrylic resins, and the like. Similarly other suitable plasticizers such as dioctylphthalate, dibutyl phthalate, and the like, can also be used.

The purpose of adding an easily evaporable solvent is (1) to initially dissolve the binder so as to enable it to coat the individual glass particles, and (2) to adjust the rheology of the slip or slurry for good castability. A particularly effective solvent for the purpose of this example are the dual solvent systems of U.S. Patent No. 4,104,245, specifically the dual methanol/-methyl isobutylketone (in a 5/8 weight ratio) solvent system.

### Step 2

The slip or slurry prepared as in Step 1 is cast, in accordance with conventional techniques, into thin green sheets (e.g. about 750-250 micrometers (3-10 mils) thick), preferably by doctor-blading techniques.

### Step 3

The cast sheets are blanked to the required dimensions and via holes are punched through them in the required configuration.

### Step 4

A metallizing paste of copper is extruded or screened into the via holes in the individual sheets.

### Step 5

A suitable copper paste or ink is then screen-printed onto the individual green sheets of Step 4, in the required conductor patterns.

### Step 6

A plurality of sheets, prepared as in Step 5, are laminated together in registry in a laminating press; The temperature and pressure employed for lamination should be such as to cause (1) the individual green sheets to bond to each other to yield a monolithic green substrate, and (2) to cause the green sheet to sufficiently flow and enclose the conductor patterns.

### Step 7

Firing of the laminate to the sintering temperatures to accomplish binder removal, densification or coalescence of the glass particles, and conversions to a glass-ceramic by crystallization with concurrent sintering of the metal particles, in the conductor patterns, the dense copper lines and vias.

A typical firing schedule is as follows. The green laminate is microwave heated at a power of approximately 150W, at a frequency of 2.45GHz at a rate of 30°C/min. in air to a hold temperature of 250°C. The laminate is held at this temperature for about one hour. The air ambient is switched to a forming gas (N₂, H₂ mix) ambient at which point the heating is again elevated at a rate of 3.8°C/min. to the crystallization temperature of the glass (e.g. about 960°C for the glass), which temperature is held for about 2 hours, after which the temperature is reduced to ambient at a rate of about 3.8°C/min.

## Claims

1. A method for forming a ceramic composite structure with electrical conductors comprising:
forming at least one green sheet comprised of a thermoplastic organic binder having dispersed therein particles selected from the group consisting of crystallizable particles of glass and an admixture of glass particles and crystalline particles, said green sheet having a sintering temperature below the melting point of said electrical conductors;
forming on a surface of said first green sheet a pattern of a conductor forming composition,
superimposing a second said sheet on said surface of said first sheet to sandwich said pattern therebetween;
laminating said superimposed sheets together;
microwave heating said laminate in an ambient of air to a burn-out temperature and maintaining said laminate thereat for sufficient time to decompose and eliminate said binder; and
sintering said laminate to form a ceramic structure having said conductors extending within the interior thereof.

2. The method of claim 1, wherein said laminate is sintered in a reducing or inert atmosphere.

3. The method of claim 1, wherein said microwave heating is at a power from 50W to 200W, and at a frequency from 200MHz to 300GHz.

4. The method of claim 1, wherein said sintering is microwave sintering.

5. The method of claim 4, wherein said microwave sintering is at a power from 10W to 100W, and at a frequency of from 200 MHz to 300 GHz.

6. The method of claim 1, wherein said burn-out takes place at a temperature from 160°C to 450°C for a time from 5 minutes to 60 minutes.

7. The method of claim 1, where said admixture contains crystalline particles selected from the group consisting of cordierite, spodument, eucryptite, enstatite, celsian, wollastinite, willemite, anorthite, lithium disilicate, lithium metasilicate, mullite, aluminum nitride, alumina and combinations thereof, and wherein said crystallizable particles of glass are selected from the group consisting of borosilicate glass, lead glass and precursors to cordierite, spodumene, eucryptite, enstatite, celsian, wollastinite, willemite, anorthite, lithium disilicate, lithium metasilicate, mullite, aluminum nitride, alumina and combinations thereof.

8. The method of claim 1, wherein said ceramic structure is heated to said burn-out temperature at a rate of 1°C to 30°C per minute and held at the burn out temperature for less than 60 minutes.

9. The method of claim 1, including providing means for extending said pattern to at least one surface of said fired laminate.

10. The method of claim 9, including mounting an integrated semiconductor chip on said surface in electrical connection to a portion of said pattern extension.

11. The method of claim 1, wherein said conductor forming composition contains binders which are burned out by microwave heating, and a material selected from the group consisting of copper, gold, silver, platinum, molybdenum, palladium, aluminum alloys thereof and combinations thereof.

12. The method of claim 1, wherein said binder is selected from the group consisting of polyvinyl butyral, polyvinyl acetate, butvar®, poly(methyl methocenylate, and cellusolve acetate.

13. The method of claim 1, wherein said glass is selected from the group consisting of crystallizable glass and uncrystallizable glass.

14. The method of claim 1, wherein said laminate is microwave heated in an ambient oxidizing to said binder and not oxidizing to said conductor forming composition.

15. A method comprising:
providing a body of a mixture of a precursor material and a binder material cast in a predetermined shape;
said precursor material being a precursor of a material selected from the group consisting of a ceramic and a glass ceramic;
said binder material having sufficient viscosity so that said body substantially retains said shape;
applying microwave radiation to said body in an ambient of air to burn out said binder.

16. A method for forming a glass ceramic composite structure with copper based conductors comprising:
forming a multilayered structure having layers of patterns of a copper-based conductor forming composition, there being at least between adjacent layers of said patterns green sheets comprised of a thermoplastic organic binder having dispersed therein particles selected from the group consisting of crystallizable particles of a glass and an admixture of glass particles and crystalline particles, said green sheet having a sintering temperature below the melting point of said copper based conductors, at least some of said green sheets between said adjacent layers of patterns having through holes of said copper-based conductor forming composition therein for electrically interconnecting said adjacent layers of patterns, the principal component of said composition is copper and said composition is resistant to oxidation during the subsequent burn out of said binders;
laminating said multilayerd structure together;
microwave heating said laminate in an ambient of air to a burn-out temperature and maintaining thereat at for sufficient time to decompose and eliminate said binder;
sintering said laminate to form a ceramic structure having said copper based conductors extending within the interior thereof.

## Patentansprüche

1. Verfahren zur Herstellung einer keramischen Verbundstruktur mit elektrischen Leitern, das folgendes umfaßt:
Bilden wenigstens einer Rohschicht, die ein thermoplastisches organisches Bindemittel mit darin verteilten Partikeln umfaßt, die aus der Gruppe ausgewählt sind, die aus kristallisierbaren Partikeln aus Glas und einer Mischung aus Glaspartikeln und kristallinen Partikeln besteht, wobei die Rohschicht eine Sintertemperatur unterhalb des Schmelzpunktes der elektrischen Leiter besitzt;
Bilden einer Struktur aus einer Zusammensetzung, die Leiter bildet, auf einer Oberfläche der ersten Rohschicht,
Auflegen einer zweiten Schicht auf die Oberfläche der ersten Schicht, um die Struktur dazwischen zu schichten;
Zusammenlaminieren der übereinandergelegten Schichten;
Erwärmen des Laminates durch Mikrowellen in einer Umgebung aus Luft auf eine Ausbrenntemperatur und Halten des Laminates bei derselben während einer ausreichenden Zeitspanne, um das Bindemittel zu zersetzen und zu eliminieren; und
Sintern des Laminates, um eine Keramikstruktur mit den Leitern zu erzeugen, die sich innerhalb des Inneren derselben erstrecken.

2. Verfahren nach Anspruch 1, wobei das Laminat in einer reduzierenden oder inerten Atmosphäre gesintert wird.

3. Verfahren nach Anspruch 1, wobei die Mikrowellenerwärmung mit einer Leistung von 50 W bis 200 W und bei einer Frequenz von 200 MHz bis 300 GHz erfolgt.

4. Verfahren nach Anspruch 1, wobei es sich bei dem Sintern um ein Mikrowellensintern handelt.

5. Verfahren nach Anspruch 4, wobei das Mikrowellensintern mit einer Leistung von 10 W bis 100 W und bei einer Frequenz von 200 MHz bis 300 GHz erfolgt.

6. Verfahren nach Anspruch 1, wobei das Ausbrennen bei einer Temperatur von 160 °C bis 450 °C während einer Zeitspanne von 5 Minuten bis 60 Minuten erfolgt.

7. Verfahren nach Anspruch 1, wobei die Mischung kristalline Partikel enthält, die aus der Gruppe ausgewählt sind, die aus Cordierit, Spodumen, Eucryptit, Enstatit, Celsian, Wollastonit, Willemit, Anorthit, Lithiumdisilicat, Lithiummetasilicat, Mullit, Aluminiumnitrid, Aluminiumoxid und Kombinationen derselben besteht, und wobei die kristallisierbaren Partikel aus Glas aus der Gruppe ausgewählt sind, die aus Borsilicatglas, Bleiglas und Vorprodukten von Cordierit, Spodumen, Eucryptit, Enstatit, Celsian, Wollastonit, Willemit, Anorthit, Lithiumdisiiicat, Lithiummetasilicat, Mullit, Aluminiumnitrid, Aluminiumoxid und Kombinationen derselben besteht.

8. Verfahren nach Anspruch 1, wobei die Keramikstruktur mit einer Geschwindigkeit von 1 °C pro Minute bis 30 °C pro Minute auf die Ausbrenntemperatur erwärmt und für weniger als 60 Minuten bei der Ausbrenntemperatur gehalten wird.

9. Verfahren nach Anspruch 1, das Bereitstellungsmittel beinhaltet, um die Struktur zu wenigstens einer Oberfläche des gebrannten Laminates zu verlängern.

10. Verfahren nach Anspruch 9, welches das Anbringen eines integrierten Halbleiterchips auf der Oberfläche in elektrischer Verbindung mit einem Teil der Strukturverlängerung beinhaltet.

11. Verfahren nach Anspruch 1, wobei die Zusammensetzung, die Leiter bildet, Bindemittel, die durch Mikrowellenerwärmung ausgebrannt werden, und ein Material enthält, das aus der Gruppe ausgewählt ist, die aus Kupfer, Gold, Silber, Platin, Molybdän, Palladium, Aluminium, Legierungen derselben und Kombinationen derselben besteht.

12. Verfahren nach Anspruch 1, wobei das Bindemittel aus der Gruppe ausgewählt ist, die aus Polyvinylbutyral, Polyvinylacetat, Butvar®, Poly(methylmethocenylat) und Celluloseacetat (cellusolve acetate) besteht.

13. Verfahren nach Anspruch 1, wobei das Glas aus der Gruppe ausgewählt ist, die aus kristallisierbarem Glas und nicht kristallisierbarem Glas besteht.

14. Verfahren nach Anspruch 1, wobei das Laminat mit Mikrowellen in einer Umgebung erwärmt wird, die das Bindemittel oxidiert und die Zusammensetzung, die Leiter bildet, nicht oxidiert.

15. Verfahren, das folgendes umfaßt:
Bereitstellen eines Körpers aus einem Gemisch eines Vorproduktmaterials und eines Bindemittelmaterials, das in eine vorgegebene Form gegossen wird;
wobei das Vorproduktmaterial ein Vorprodukt eines Materials ist, das aus der Gruppe ausgewählt ist, die aus einer Keramik und einer Glaskeramik besteht;
wobei das Bindemittelmaterial eine ausreichende Viskosität besitzt, so daß der Körper im wesentlichen die Form behält;
Anwenden von Mikrowellenstrahlung auf den Körper in einer Umgebung aus Luft, um das Bindemittel auszubrennen.

16. Verfahren zur Herstellung einer glaskeramischen Verbundstruktur mit auf Kupfer basierenden Leitern, das folgendes umfaßt:
Bilden einer Mehrschichtstruktur mit Schichten aus Strukturen einer Zusammensetzung, die auf Kupfer basierende Leiter bildet, wobei sich wenigstens zwischen benachbarten Schichten der Strukturen Rohschichten befinden, die ein thermoplastisches organisches Bindemittel mit darin verteilten Partikeln umfassen, die aus der Gruppe ausgewählt sind, die aus kristallisierbaren Partikeln aus einem Glas und einer Mischung aus Glaspartikeln und kristallinen Partikeln besteht, wobei die Rohschicht eine Sintertemperatur besitzt, die unterhalb des Schmelzpunktes der auf Kupfer basierenden Leiter liegt, wenigstens einige der Rohschichten zwischen den benachbarten Schichten aus Strukturen darin befindliche Durchführungsöffnungen aus der Zusammensetzung, die auf Kupfer basierende Leiter bildet, zur elektrischen Verbindung der benachbarten Schichten aus Strukturen aufweist, die Hauptkomponente der Zusammensetzung Kupfer ist und die Zusammensetzung während des nachfolgenden Ausbrennens der Bindemittel gegen Oxidation beständig ist;
Zusammenlaminieren der Mehrschichtstruktur;
Erwärmung des Laminates durch Mikrowellen in einer Umgebung aus Luft auf eine Ausbrenntemperatur und Halten bei derselben während einer ausreichenden Zeitspanne, um das Bindemittel zu zersetzen und zu eliminieren;
Sintern des Laminates, um eine Keramikstruktur mit auf Kupfer basierenden Leitern zu bilden, die sich innerhalb des Inneren derselben erstrecken.

## Revendications

1. Une méthode de formation d'une structure composite de céramique avec des conducteurs électriques, comprenant:
- la formation d'au moins une feuille brute composée d'un liant organique thermoplastique dans lequel sont dispersées des particules sélectionnées dans le groupe composé de particules de verre cristallisable et d'un mélange de particules de verre et de particules cristallines, ladite feuille brute ayant une température de frittage inférieure au point de fusion desdits conducteurs électriques;
- la formation sur une surface de ladite première feuille brute, d'une configuration d'une composition de formation de conducteurs,
- la superposition d'une dite seconde feuille sur ladite surface de ladite première feuille pour disposer ladite configuration en sandwich entre les deux feuilles,
- le laminage desdites feuilles superposées en même temps;
- le chauffage par micro-ondes dudit feuilleté dans l'air ambiant à une température d'élimination par combustion et le maintien dudit feuilleté à celle ci pendant un temps suffisant pour décomposer et éliminer ledit liant; et
- le frittage dudit feuilleté pour former une structure de céramique dans laquelle sont disposés lesdits conducteurs.

2. La méthode de la revendication 1 dans laquelle ledit feuilleté est fritté dans une atmosphère de réduction ou inerte.

3. La méthode de la revendication 1 dans laquelle ledit chauffage par micro-ondes est d'une puissance de 50 à 200W et à une fréquence de 200MHz à 300GHz.

4. La méthode de la revendication 1 dans laquelle ledit frittage est un frittage à micro-ondes.

5. La méthode de la revendication 4 dans laquelle ledit frittage à micro-ondes est réalisé avec une puissance de 10W à 100W et à une fréquence de 200 MHz à 300 MHz.

6. La méthode de la revendication 1 dans laquelle ladite élimination par combustion se déroule à une température comprise entre 160°C et 450°C pendant un temps de 5 minutes à 60 minutes.

7. La méthode de la revendication 1 dans laquelle ledit mélange contient des particules cristallines sélectionnées dans le groupe comprenant la cordiérite, le spodument, l'eucryptite, l'enstatite, le celsian, la wollastinite, la willemie, l'anorthote, le disilicate de lithium, le métasilicate de lithium, la mullite, le nitrure d'aluminium, l'alumine et des combinaisons de ceux ci, et dans laquelle lesdites particules cristallisables de verre sont sélectionnées dans le groupe comprenant le verre de borosilicate, le verre au plomb et des précurseurs de cordiérite, de spodumène, d'eucryptite, d'enstatite, de celsian, de wollastinite, de willemite, d'anorthite, de disilicate de lithium, de métasilicate, de mullite, de nitrure d'aluminium, d'alumine et de combinaisons de ceux ci.

8. La méthode de la revendication 1 dans laquelle ladite structure de céramique est chauffée à ladite température d'élimination par combustion à une vitesse de 1°C à 30°C par minute et maintenue à ladite température d'élimination par combustion pendant moins de 60 minutes.

9. La méthode de la revendication 1 comprenant la provision de moyens pour étendre ladite configuration à au moins une surface dudit feuilleté chauffé.

10. La méthode de la revendication 9 comprenant le montage d'une microplaquette semiconductrice intégrée sur ladite surface en connexion électrique avec une partie de ladite extension de configurations.

11. La méthode de la revendication 1 dans laquelle ladite composition de formation des conducteurs contient des liants qui sont soumis à une élimination par combustion par chauffage à micro-ondes, et un matériau sélectionné dans le groupe composé du cuivre, de l'or, de l'argent, du platine, du molybdène, du palladium, d'alliages d'aluminium de ceux ci et de combinaisons de ceux ci.

12. La méthode de la revendication 1 dans laquelle ledit liant est sélectionné dans le groupe composé du butyral de polyvinyle, de l'acétate de polyvinyle, du butvar (reg.), du poly(méthyle méthocénylate), et du cellusolve acétate.

13. La méthode de la revendication 1 dans laquelle ledit verre est sélectionné dans le groupe composé du verre cristallisable et du verre non-cristallisable.

14. La méthode de la revendication 1 dans laquelle ledit feuilleté est chauffé par micro-ondes dans une atmosphère oxydante audit liant et non oxydante à ladite composition de formation des conducteurs.

15. Une méthode comprenant:
- la provision d'un composé d'un mélange d'un matériau précurseur et d'un matériau liant coulés dans une forme prédéterminée;
- ledit matériau précurseur étant un précurseur d'un matériau sélectionné dans le groupe composé d'une céramique et d'une céramique de verre;
- ledit matériau liant ayant une viscosité suffisante pour que ledit composé conserve pratiquement sa forme;
- l'application d'un rayonnement de micro-ondes audit composé en atmosphère ambiante pour éliminer ledit liant par combustion.

16. Une méthode de formation d'une structure composite de céramique de verre avec des conducteurs à base de cuivre comprenant:
- la formation d'une structure à couches multiples comprenant des couches de configurations d'une composition de formation de conducteurs à base de cuivre, avec au moins entre des couches adjacentes desdites configurations, des feuilles brutes composées d'un liant organique thermoplastique dans lequel sont dispersées des particules sélectionnées dans le groupe composé de particules cristallisables d'un verre et d'un mélange de particules de verre et de particules cristallines, ladite feuille brute ayant une température de frittage inférieure au point de fusion desdits conducteurs à base de cuivre, au moins certaines desdites feuilles brutes entre lesdites couches adjacentes de configurations présentant des trous de traversée de ladite composition de formation des conducteurs à base de cuivre pour interconnecter électriquement lesdites couches adjacentes de configurations, le composant principal de ladite composittion est du cuivre et ladite composition est résistante à l'oxydation pendant l'élimination par combustion ultérieure desdits liants;
- la lamination de ladite structure de couches multiples;
- le chauffage par micro-ondes dudit feuilleté à l'air ambiant à une température d'élimination par combustion et son maintien à celle ci pendant un temps suffisant pour décomposer et éliminer ledit liant;
- le frittage dudit feuilleté pour former une structure de céramique présentant desdits conducteurs à base de cuivre disposé s à l'intérieur de celle ci.
